# EUROPÄISCHE PATENTSCHRIFT

(11) **EP 1 770 071 B1**
(45) Veröffentlichungstag und Bekanntmachung des Hinweises auf die Patenterteilung: **18.11.2015**
(21) Anmeldenummer: 06119288.6
(22) Anmeldetag: 22.08.2006
(51) Int. Cl.: C03C 17/10, C03C 17/36, C03C 17/40, C03C 10/00

(54) **Kochfeld mit einer unterseitig beschichteten Glaskeramikplatte als Kochfläche**
Glassceramic topplate for a cooking device with an underneath coating
Plaque de cuisson en matière vitrocéramique avec une sous-couche

(30) Priorität: 01.10.2005 DE 102005046570
(43) Veröffentlichungstag der Anmeldung: 04.04.2007
(73) Patentinhaber: Schott AG, 55122 Mainz (DE)
(72) Erfinder: Striegler, Harald, 55437 Ockenheim (DE); Wennemann, Dietmar, 55234 Albig (DE); Lukas, Annette, 63517 Rodenbach (DE)
(74) Vertreter: Mehler Achler

(56) Entgegenhaltungen:
- EP-A- 0 861 014
- EP-A- 1 267 593
- EP-A- 1 364 924
- EP-A1- 0 854 476
- WO-A-03/084891
- DE-A1- 3 828 799
- DE-C1- 19 721 737
- DE-C1- 19 728 881
- US-A- 4 659 906
- US-B1- 6 437 918
- US-B1- 6 542 685

## Beschreibung

Die Erfindung bezieht sich auf eine Glaskeramikplatte, ausgebildet als Kochfläche für ein Kochfeld, bestehend aus einer neben der IR-Strahlung auch für das sichtbare Licht transparenten Glaskeramik vom Typ Li₂O-Al₂O₃-SiO₂, mit einer unterseitigen Beschichtung der Glaskeramikplatte in Form eines Edelmetallfilmes.

Die Erfindung betrifft ferner ein Verfahren zur unterseitigen Beschichtung der Glaskeramikplatte.

Glaskeramikplatten, die als Kochfläche in Kochfeldern eingesetzt werden, sogenannte Glaskeramik-Kochflächen, sind im europäischen Markt typischerweise in der Schmelze dunkel eingefärbt, derart, dass sie in Draufsicht schwarz erscheinen und einen Blick ins Innere des Kochfeldes verhindern. Allerdings bei starker Bestrahlung von oben, insbesondere mit den in heutigen Küchen z. T. üblichen Halogenleuchten, lassen sie dennoch einen Blick auf die Kabel oder andere Bauelemente im Innern des Kochfeldes zu. Um eine ausgeprägt blickdichte Kochfläche zu erhalten, wird daher bei hochwertigen Kochgeräten eine Siliconbeschichtung auf die typischerweise genoppte Unterseite der Glaskeramikplatte aufgebracht. Die blickdichte Siliconbeschichtung muss allerdings im Displaybereich und im Bereich der Lampen zur Restwärmeanzeige ausgespart werden, damit die Leuchtanzeigen für den Benutzer erkennbar sind. In der Regel wird dabei die Noppenstruktur der Glaskeramikplattenunterseite in dem Bereich der Leuchtanzeigen (Displaybereich und Restwärmeanzeigen) mit einer farblosen Siliconschicht geebnet, damit die Leuchtanzeigen unverzerrt erscheinen.

Besonders in Japan werden in letzter Zeit vermehrt Kochflächen mit farblosen, d. h. nicht in der Schmelze eingefärbten, auch für das sichtbare Licht transparenten beidseitig glatten Glaskeramikplatten verwendet, die unterseitig in besonderer Weise beschichtet sind, wodurch eine Draufsicht in das Kochfeldinnere nicht möglich ist. Die Kochflächen mit farblosen, beidseitig glatten Glaskeramikplatten haben den Vorteil, dass ihre Farbe in einfacher Weise durch die unterseitige Beschichtung verändert werden kann, dass also mit demselben (farblosen) Glaskeramiksubstrat durch unterseitige Beschichtung neben schwarzen Kochflächen auch silberne, gelbe, grüne oder beliebig andersfarbige Kochflächen hergestellt werden können. Weil diese Glaskeramikplatten auf der Unterseite keine Noppen haben, können beleuchtete Kochzonenanzeigen, Displays oder Restwärmeanzeigen direkt auf der Kochflächenunterseite aufgebracht werden und sind gut erkennbar, sofern die blickdichte Beschichtung in diesen Bereichen ausgespart wird.

Als Unterseitenbeschichtungen sind aus der japanischen Offenlegungsschrift H7-17409 B2 Edelmetallfilme bekannt. Ferner sind aus EP 1 267 593 B1 unterseitige Beschichtungen auf Basis von Glasflüssen und anorganischen Pigmenten bekannt, die mit einer weiteren Schicht auf organischer Basis (Silicon, Polyamid o. ä.) versehen werden können. In der DE 100 14 373 C2 werden neben Edelmetallschichten auch Sol-Gel-Schichten erwähnt. In der WO 03/098 115 A1 werden gesputterte Schichten genannt.

Diese Beschichtungen wiesen bei der Prüfung als Unterseitenbeschichtung von Glaskeramik-Kochflächen folgende Nachteile auf:
Die aus JP H7-17409 B2 bekannten Edelmetallfilme sind aufgrund des Gehalts an Übergangsmetallen (z.B. Silber) nicht beständig gegenüber eingebrannten Lebensmitteln. Die Beständigkeit der Unterseitenbeschichtung gegenüber Lebensmitteln ist bei Kochgeräten mit Gasbeheizung jedoch notwendig, da Lebensmittel beim Kochen durch die Öffnung in der Glaskeramik-Kochfläche, die als Durchführung für den Gasbrenner unerlässlich ist, auf die Unterseite der Glaskeramik-Kochfläche gelangen können. Die bekannte Lösung eignet sich daher nicht für Gas-Kochfelder.

Da die in JP H7-17409 B2 genannten Edelmetallfilme metallisch glänzen und Licht gut reflektieren, werden durch solche Edelmetallschichten eventuelle Fehler der Glaskeramik (z.B. kleine Blasen, Kratzer oder eingeschmolzene Steinchen) gespiegelt, d. h. verdoppelt und dadurch besonders deutlich sichtbar. Kleinere Fehler in der Glaskeramik wie Kratzer oder Bläschen lassen sich jedoch bei der Produktion farbloser Glaskeramik-Kochflächen nicht vollständig vermeiden, so dass die alleinige Beschichtung von farbloser Glaskeramik mit Edelmetallpräparaten zu hohen Ausschussraten und damit zu einem unwirtschaftlichen Prozess führt.

Poröse Unterseitenbeschichtungen aus Glasflüssen und anorganischen Pigmenten gemäß der genannten EP 1 267 593 B1 oder auf Basis Sol-Gel gemäß der vorgenannten DE 100 14 373 C2, erwiesen sich für die Anwendung in Kochgeräten mit Gasanwendung ebenfalls als ungeeignet, da Lebensmittel auf der Unterseite bereits ohne Temperaturbehandlung deutlich sichtbare Flecken hinterließen. Durch die Verwendung einer versiegelnden Siliconbeschichtung, wie sie in der o. g. Schrift vorgeschlagen wird, konnte ebenfalls kein dauerhafter Schutz erreicht werden, da die Siliconschicht der hohen Temperatur in der Nähe des Gasbrenners (ca. 450 - 550° C) nicht standhielt. Auch führte die Zersetzung der Siliconschicht zu einer deutlichen Farbveränderung (einem Aufhellen) der Unterseitenbeschichtung.

Gesputterte Schichten nach der WO-Schrift haben - auch wenn sie den Anforderungen an die chemische Beständigkeit und die Temperaturbeständigkeit genügen würden - den Nachteil, dass zur Gestaltung von Displayfenstern oder anderen Aussparungen für Leuchtanzeigen eine aufwendige Markierungstechnologie, z. B. gemäß JP (A) 2004 342 609, erforderlich ist.

Aus der DE 197 28 881 C1 sind mit keramischen Farben dekorierte Glasartikel bekannt. Um die Auffälligkeit von Fingerabdrücken, Gebrauchsspuren und Kratzern zu verringern, sind auf der Oberfläche des Glaskeramikartikels mindestens zwei, zueinander korrespondierende und sich zu einer geschlossenen, vollflächigen Dekor-Bedeckung der Oberfläche des Glaskeramikartikels ergänzende, rasterförmige Strukturelemente als nebeneinander angeordnete Farbaufträge aufgebracht. Aufgrund der vollflächigen Abdeckung kann auf eine Unterseitenbeschichtung verzichtet werden.

Der Erfindung liegt die Aufgabe zugrunde, die eingangs bezeichnete, als Kochfläche für Kochfelder ausgebildete Glaskeramikplatte hinsichtlich ihrer unterseitigen Beschichtung so auszubilden bzw. so herzustellen, dass diese folgende Eigenschaften hat:
a) Chemische Beständigkeit gegenüber Lebensmitteln und üblichen Reinigungsmitteln
b) Blickdicht unter den in Küchen üblichen Beleuchtungsbedingungen
c) Produktionstechnisch einfache Gestaltbarkeit der beschichteten Bereiche
d) Temperaturbeständigkeit bis 550° C
e) Fehler der Glaskeramik dürfen nicht als störend wahrgenommen werden.

Die Lösung dieser Aufgabe gelingt bei einer Glaskeramikplatte, ausgebildet als Kochfläche für ein Kochfeld, bestehend aus einer neben der IR-Strahlung auch für das sichtbare Licht transparenten Glaskeramik, mit einer unterseitigen Beschichtung der Glaskeramikplatte in Form eines Edelmetallfilmes gemäß der Erfindung dadurch, dass
- der Edelmetallfilm aus einer ihm eine spiegelnde Eigenschaft verleihenden Legierung aus Gold und/oder Platin und/oder Palladium besteht,
- der Edelmetallfilm einen Gesamtedelmetallgehalt von 90 - 100 Gew.-% bezogen auf das gesamte Filmmaterial aufweist,
- der Gehalt an Silber, Kupfer, Silicium, Bismut sowie unedler Metalle in dem Edelmetallfilm insgesamt maximal 0 - 5 Gew.-%, bezogen auf den Gesamtmetallgehalt,
- die Schichtdicke des Edelmetallfilms < 1 µm, und
- der spektrale Transmissionsgrad der beschichteten Glaskeramik-platte im sichtbaren Wellenlängenbereich 0 - 4 % und im Infrarot-Bereich 0 bis < 12 % beträgt,
- und dass auf der Oberseite der Glaskeramikplatte ein rasterförmiges Dekor aufgebracht ist.

Die erfindungsgemäße Beschichtung von Glaskeramik-Kochflächen mit Edelmetallfilmen, die keine oder nur geringe Mengen (5 Gew.-% oder weniger bezogen auf den Gesamtmetallgehalt des Edelmetallfilms) an Silber, Kupfer, Silicium, Zinn, Blei, Bismut, Eisen, Cobalt, Nickel oder anderen, in der ausgebildeten Edelmetallschicht leicht durch Einbrand von Lebensmitteln (Speiseöl, Soja etc.) oxidierbaren Metallen (z.B. alle unedlen Metalle, also Metalle mit negativem Standardpotential) enthalten, hat besondere Vorteile bei der Anwendung in Gas-Kochfeldern. Derartige Schichten aus vor allem Gold, Platin und Palladium (90 - 100 Gew.-%, bevorzugt 95 - 100 Gew.-% bezogen auf den Gesamtmetallgehalt des Edelmetallfilmes) haben eine extrem hohe chemische Beständigkeit, so dass durch eingebrannte Lebensmittel oder übliche Glasreiniger keine von der Oberseite der Glaskeramik her erkennbaren Verfärbungen auftreten.

Besonders blickdichte Beschichtungen werden erhalten, wenn das Edelmetallpräparat vor dem Einbrand einen Gesamt-Edelmetallgehalt von 5 - 50 Gew.-%, insbesondere 10 - 20 Gew.-% hat, bezogen auf die gesamte Farbpaste aus z.B. organometallischen Verbindungen, Lösungsmittel und Harzen, und die Schichtdicke vor dem Einbrand 1µm - 10µm, insbesondere 2µm - 5µm beträgt. Das Edelmetallpräparat kann mit Hilfe der Lösungsmittel und Harze siebdruckfähig, vor allem thixotrop, eingestellt werden, so dass die Strukturierung der Beschichtung, z. B. durch Aussparen von Displayfendern oder eines umlaufenden, unbeschichteten Randes, auf technisch äußerst einfache Weise möglich ist. Nach dem Einbrand beträgt die Schichtdicke der Edelmetallschicht in der Regel weniger als 1µm, bevorzugt beträgt sie 0,05µm - 0,5µm, insbesondere 0,1µm - 0,2µm. Das Edelmetallpräparat wird bei Temperaturen über 600° C, üblicherweise bei 780 - 850° C, besonders bei 830 ± 10° C eingebrannt.

Durch die erfindungsgemäßen Maßnahmen wird mit Vorteil erreicht, dass die spektrale Transmission der unterseitig beschichteten Glaskeramikplatte im sichtbaren Wellenlängenbereich 0 - 4 %, bevorzugt 0 - 1,7 % beträgt, was einer sehr hohen Blickdichtheit entspricht.

Das Verfahren zur unterseitigen Beschichtung der Glaskeramikplatte sieht folgende Schritte vor:
- Bereitstellen mindestens eines Edelmetallpräparates, enthaltend eine Legierung aus Gold und/oder Platin und/oder Palladium, bei dem im eingebrannten Zustand der Gehalt an Silber, Kupfer, Silicium, Bismut sowie unedler Metalle insgesamt maximal 0 - 5 Gew.-%, bezogen auf den Gesamtmetallgehalt des Edelmetallfilmes, beträgt,
- Aufbringen des Edelmetallpräparates in mindestens einer Schicht auf die betriebliche Unterseite der Glaskeramikplatte in einer Schichtdicke von 1µm - 10µm, vorzugsweise 2µm - 5µm, und
- Einbrennen der aufgetragenen Edelmetallschicht bei einer Brenntemperatur > 600° C, vorzugsweise bei 780 - 850° C.

Der Edelmetallfilm ist aufgrund der hohen Schmelzpunkte der Edelmetalle (Gold, Platin, Palladium schmelzen bei über 1000° C), sowie aufgrund enthaltener Filmstabilisatoren (z.B. Rhodiumoxid) und
der chemischen Inertheit von Edelmetallen, thermisch dauerhaft stabil bis über 550° C.

Als Material für die Glaskeramikplatten eignen sich im besonderen Maße Glaskeramiken vom Typ Li₂O-Al₂O₃-SiO₂, z.B. die auf dem Markt, z. B. bei der Firma Schott AG erhältlichen farblosen Glaskeramiken mit einer thermischen Ausdehnung von -10 · 10⁻⁷ K⁻¹ bis +30 · 10⁻⁷ K⁻¹ in dem Temperaturbereich 30 - 500° C, deren Zusammensetzungen in der nachstehenden Tabelle I angegeben ist:

**Tab. 1**

| **Zusammensetzung geeigneter Glaskeramik-Substrate** | | |
|---|---|---|
| Elementoxid | Glaskeramik-Zusammensetzung (Gew.-%) | |
| SiO₂ | 66 - 70 | 50 - 80 |
| Al₂O₃ | > 19,8 - 23 | 12 - 30 |
| Li₂O | 3 - 4 | 1 - 6 |
| MgO | 0 - 1,5 | 0 - 5 |
| ZnO | 1 - 2,2 | 0 - 5 |
| BaO | 0 - 2,5 | 0 - 8 |
| Na₂O | 0 - 1 | 0 - 5 |
| K₂O | 0 - 0,6 | 0 - 5 |
| TiO₂ | 2 - 3 | 0 - 8 |
| ZrO₂ | 0,5 - 2 | 0 - 7 |
| P₂O₅ | 0 - 1 | 0- 7 |
| Sb₂O₃ | Übliche Mengen | 0 - 4 |
| As₂O₃ | Übliche Mengen | 0 - 2 |
| CaO | 0 - 0,5 | 0 |
| SrO | 0 - 1 | 0 |
| Quelle | EP 1 170 264 B1, Anspruch 4, 15 | JP (A) 2004-193050 |

Da die auf der Unterseite der Glaskeramikplatte angebrachten Edelmetallschichten aufgrund ihrer hohen Reflexion sichtbaren Lichts jeden Defekt, der sich auf oder in der Glaskeramikplatte befindet, spiegeln, würden diese Defekte deutlich in Erscheinung treten. Denn selbst kleinste Defekte (wie z.B. Bläschen mit weniger als 0,5 mm Durchmesser) werden durch Spiegelung an der reflektierenden Unterseitenbeschichtung verdoppelt, also vergrößert und dadurch von einem Betrachter als Makel des Produkts - als Störung der angestrebten Einheitlichkeit - wahrgenommen.

Die Verringerung der Auffälligkeit kleiner Glaskeramikfehler (mit einer Ausdehnung unter 1 mm) wie Bläschen, Kratzer, eingeschmolzener Steinchen oder auch Pits (kleiner Vertiefungen in der Glaskeramik) gelingt durch die Kaschierung mit üblichen Dekorfarben, wenn die Dekorfarben auf der Glaskeramik-Oberseite in speziellen Rastern aufgebracht werden. Übliche Dekorfarben sind Emailfarben, wie sie z. B. in EP 0 771 765 B1 oder DE 197 21 737 C1 beschrieben werden. Da die Emailfarben auf farbloser Glaskeramik nicht ausreichend deckend sind, sondern die Durchsicht in das Geräteinnere erlauben, besteht nicht die Möglichkeit, Glasfehler durch das Oberseitendekor vollständig zu überdecken. Vielmehr muss das Auge des Betrachters durch das Raster, in dem das Oberseitendekor aufgebracht wurde, ausreichend von den Defekten abgelenkt werden.

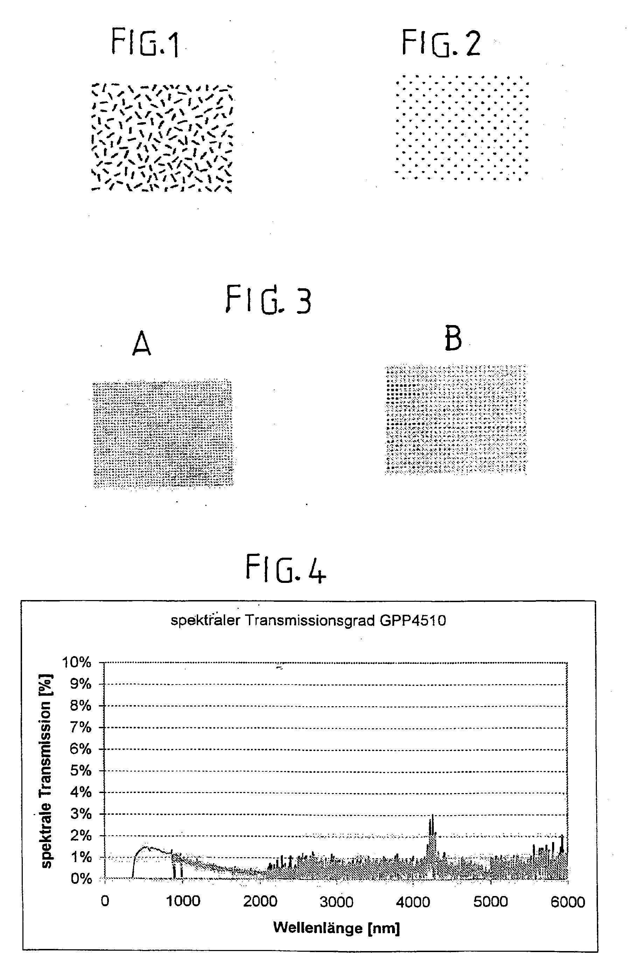

Geeignet sind typischerweise unsymmetrische Raster gemäß Fig. 1, weil sie der Kochfläche ein sehr unregelmäßiges Aussehen verleihen, wodurch dem Betrachter evtl. vorhandene Defekte in der Glaskeramik, oder auch der unterseitigen Edelmetallschicht, nicht mehr auffallen, d. h. nicht "ins Auge springen".

Überraschenderweise kann einer Kochfläche aus farbloser Glaskeramik mit spiegelnder Unterseitenbeschichtung aber auch durch regelmäßige, d. h. symmetrische Raster mit einem relativ geringen Flächen-belegungsgrad gemäß Fig. 2 das notwendige unregelmäßige Aussehen zur Kaschierung evtl. vorhandener Defekte verliehen werden. Denn bei regelmäßigen Rastern mit einem Belegungsgrad von 2 bis 12 %, deren Strukturelemente mindestens 2 mm und höchstens 4 mm voneinander entfernt sind, werden die Strukturelemente des oberseitig aufgebrachten Rasters von dem unterseitig aufgebrachten Edelmetallfilm gespiegelt, wodurch sich insgesamt ebenfalls ein unregelmäßiges Aussehen der gesamten Kochfläche ergibt, das Fehler der Glaskeramik sehr gut kaschiert. Die Strukturelemente des Rasters können typischerweise durch Punkte oder Striche gebildet sein.

Ausgehend von einem optimalen Abstand der Strukturelemente von 2,5 mm (bei einer 4 mm dicken Glaskeramik-Kochfläche) und einem optimalen Flächenbelegungsgrad von 3 - 5 %, nimmt die kaschierende Wirkung ab, weil
a) mit größerem Abstand der Strukturelemente, d.h. bei verringertem Flächenbelegungsgrad, Bild und Spiegelbild eine wahrnehmbare Einheit bilden, wodurch die gewünschte Unregelmäßigkeit, die von evtl. vorhandenen Defekten ablenkt, verloren geht. Durch die freien, d.h. oberseitig unbeschichteten Bereiche hindurch, kann ein Betrachter wieder - zwischen den oberseitig aufgebrachten Strukturelementen und ihren Spiegelbildern hindurch - direkt auf evtl. vorhandene Defekte durchzusehen, ähnlich wie bei einer oberseitig unbeschichteten Kochfläche
b) mit kleinerem Abstand der Strukturelemente, d. h. erhöhtem Flächenbelegungsgrad, die Spiegelbilder der Strukturelemente immer weiter zusammenrücken, mit der Folge, dass das unregelmäßige Aussehen der Kochfläche ebenfalls verloren geht und die Defekte, die kaschiert werden sollen, durch das oberseitig aufgebrachte Dekor hindurch wahrgenommen werden.

Die Fig. 3 zeigt in zwei Figurenteilen A, B zwei Raster, die Defekte nicht ausreichend kaschieren, weil der Abstand der Strukturelemente geringer als 2 mm ist und der Belegungsgrad über 12 % beträgt.

Neben der Kaschierung evtl. vorhandener Defekte verringert das Oberseitendekor die spiegelnde Wirkung der Unterseitenbeschichtung, was aus ästhetischen Gründen erwünscht ist.

Durch die Variation der Farbe des Oberseitendekors (z. B. weiß, grau, braun) kann ferner der Farbeindruck der gesamten Kochfläche verändert werden. Da die oberseitig aufgebrachten Dekorfarben nicht deckend, sondern durchscheinend sind, ergibt sich der interessante Effekt, dass von dem Betrachter die Farbänderung der Kochfläche der metallisch glänzenden Unterseitenbeschichtung und nicht dem Oberseitendekor zugeordnet wird. Zum Beispiel erscheinen Kochflächen, die mit ein und derselben silbern glänzenden Unterseitenbeschichtung versehen sind, bei weißem Oberseitendekor hellsilbern, bei grauem Oberseitendekor dunkelsilbern und bei braunem Oberseitendekor bronzefarben.

Durch die Variation der Schichtdicke des Edelmetallfilms kann die Helligkeit der Unterseitenbeschichtung verändert werden. Die Beschichtungen sind dunkler, wenn die Schichtdicke erhöht wird. Bei einem siebdruckfähigen Edelmetallpräparat kann daher z. B. auf eine erste Lage, mit der die Kochfläche vollflächig beschichtet ist, in einer zweiten Lage ein Muster, Firmenlogo o. ä. gedruckt werden, das sich nach dem Einbrand dunkler von der silbernen ersten Lage abhebt.

Die beschriebenen Edelmetallbeschichtungen sind neben der Anwendung bei Gas-Kochfeldern überraschenderweise trotz ihrer hohen elektrischen Leitfähigkeit auch für induktionsbeheizte Kochmulden geeignet. Die Ankochzeit beträgt 9 - 12 min, je nach Art des Kochtopfes und der Wassermenge, und liegt damit im üblichen Rahmen. Sie ist vergleichbar mit den Ankochzeiten, die bei strahlungsbeheizten Kochflächen aus üblicher schwarzer Glaskeramik, z. B. CERAN HIGHTRANS^{®}, erhalten werden.

Bei dem Einsatz von Edelmetallpräparaten als Unterseitenbeschichtung in Kochfeldern mit Induktionsanwendung könnte die Unterseiten-beschichtung durch Bauteile innerhalb des Kochfeldes, die von unten an der Kochfläche anliegen, z. B. die Glimmerplatte auf der Induktionsspule oder die Metallplatte im Bereich einer elektrisch beheizbaren Warmhaltezone, verkratzt werden. Als wirksamer Kratzschutz, welcher die Gebrauchseigenschaften der Edelmetallschicht nicht beeinträchtigt, kann auf dieser eine Beschichtung auf Basis von Silicon, Polyamid- oder Polyimid aufgebracht werden.

Nicht geeignet sind die beschriebenen, erfindungsgemäßen blickdichten Edelmetallschichten für den Heißbereich strahlungs-beheizter Kochflächen, da die Infrarotstrahlung des Heizelements von der Beschichtung zu stark reflektiert wird, d. h. eine zufriedenstellende Ankochzeit ist dann nicht erreichbar. Die spektrale Transmission der beschriebenen Edelmetallschichten liegt im infraroten (800 nm - 6000 nm) und im sichtbaren Wellenlängenbereich (350 - 800 nm) unter 12 %, eher bei 0 bis 4 %. Die diskutierten Edelmetallschichten unterscheiden sich daher auch durch ihre Transmission von den Edelmetallschichten, welche in der eingangs zitierten JP H7-17409 B2 genannt werden und im Infrarot-Bereich eine Transmission von 12 - 87 % aufweisen. Wird allerdings der Heissbereich, d. h. die Kochzone, von der erfindungsgemäßen Beschichtung ausgespart bzw. durch eine andere blickdichte Beschichtung ersetzt, dann kann die Glaskeramikplatte auch für strahlungsbeheizte Kochflächen eingesetzt werden. Die erfindungsgemäße Beschichtung kann auch neben dem Heißbereich im Displaybereich oder im Bereich von Leuchtanzeigen oder im Bereich anderer Funktionselemente, z. B. Touch-Control-Einheiten der Kochfläche ausgespart sein.

### AUSFÜHRUNGSBEISPIELE

### Beispiel 1 ("silbern glänzende Unterseitenbeschichtung")

Eine farblose Glaskeramikplatte mit einer Zusammensetzung gemäß EP 1 170 264 B1 (Tab. 1, linke Spalte) wurde oberseitig mit einer weißen Dekorfarbe gemäß DE 197 21 737 C1 und einem regelmäßigen, kaschierenden Raster nach Fig. 2 beschichtet und keramisiert. Anschließend wurde auf die Unterseite der keramisierten Glaskeramikplatte das kommerziell erhältliche silberfreie Edelmetallpräparat GPP 4510 (Fa. HERAEUS, Hanau) mittels Siebdruck (Siebweite 140-31) aufgebracht und ca. 3 Std. bei 20° C getrocknet. Dann wurde die beschichtete Glaskeramik mit 1 K / min auf 830 °C erhitzt und die Beschichtung 1 Stunde bei 830 °C eingebrannt. Nach dem Einbrand war die Unterseite der Glaskeramik-Kochfläche silbern glänzend beschichtet (siehe auch Versuch 1 der Tabelle 2)..

Der Edelmetallanteil der Farbe betrug 11 Gew.-% (89 Gew.-% Glühverlust). Der Edelmetallfilm setzte sich zusammen (in Gewichtsprozent) aus 60 - 90 % Gold, 16 - 24 % Platin und 0,5 - 2 % Rhodium sowie jeweils 0 - 1 % Bismut und Chrom.

Die fertige Glaskeramikplatte wurde als Kochfläche in ein Kochfeld für Gasanwendung eingebaut.

Zur Prüfung der Beständigkeit gegenüber Lebensmitteln wurden Soja und Öl auf die Unterseitenbeschichtung aufgebracht und durch den Betrieb des Kochfeldes eingebrannt. Auf derjenigen Seite, die dem Benutzer abgewandt - also nicht zugänglich - war, entstanden durch den Einbrand des Öls und der Soja-Sauce schwarze Flecken. Die Flecken waren jedoch bei der Betrachtung der Oberseite der Glaskeramikkochfläche nicht sichtbar. Die Beschichtung war auch nicht beschädigt, z.B. abgelöst o.ä., d.h., die Beschichtung war ausreichend beständig gegenüber Lebensmitteln.

Die Blickdichte wurde überprüft, indem die eingebaute Kochfläche, sowohl bei Tageslicht (D65 L 18 Watt/72-965, 6500 K), als auch bei Beleuchtung mit Halogenstrahlern einer üblichen Kochstelle (Fa. Bosch-Siemens-Hausgeräte, B/S/H) betrachtet wurde. Da die inneren Strukturen der Kochfelder in beiden Fällen nicht erkannt werden konnten, ist die Unterseitenbeschichtung ausreichend blickdicht. Die spektrale Transmission der unterseitig beschichteten Glaskeramikplatte (ohne Oberseitendekor) betrug im sichtbaren Wellenlängenbereich weniger als 1,5 %, gemäß der Transmissionskurve nach Fig. 4.

Die Temperaturbeständigkeit wurde überprüft, indem die Glaskeramik-platte in einem Ofen 24 Std. auf 550° C erhitzt wurde. Bei dem anschließenden Vergleich des Farbtons mit einer Referenz konnte kein Farbunterschied festgestellt werden. Auch die Haftfestigkeit der Beschichtung war nach der Temperung ausreichend. Sie wurde mit dem "TESA-Test" geprüft, wobei auf die Unterseitenbeschichtung ein Streifen transparenten Klebefilms angerieben und dann ruckartig abgerissen wird (Tesafilm^{®} Typ 104, Beiersdorf AG). Da an dem Klebestreifen mit dem normalsichtigen Auge keine abgelösten Teilchen der Beschichtung festgestellt werden konnten, ist die Beschichtung thermisch ausreichend stabil.

Die kaschierende Wirkung des Rasters, mit dem die Glaskeramikplatte oberseitig dekoriert worden war, wurde beurteilt, indem die Glaskeramikplatte hinsichtlich Defekten im Glaskeramik-Substrat oder in der Unterseitenbeschichtung betrachtet wurde. Bei dem verwendeten Raster wurden bei Betrachtung aus 50 cm Abstand Defekte nicht entdeckt oder gefundene Defekte nicht als störend wahrgenommen.

### Beispiel 2 ("golden glänzende Unterseitenbeschichtung")

Analog zu Ausführungsbeispiel 1 wurde ein anderes, ebenfalls silberfreies Edelmetallpräparat (GGP 070505, Fa. HERAEUS, Hanau) verwendet, das nach dem Einbrand eine golden glänzende Unterseitenbeschichtung ergibt. Auch bei dieser Beschichtung waren die Beständigkeit gegenüber Lebensmitteln, die Blickdichte, die Temperaturbeständigkeit (einschließlich der Haftfestigkeit) und die kaschierende Wirkung des Oberseitendekors gemäß o. g. Tests zufriedenstellend.

### Beispiel 3 ("Variation des Unterseitenfarbtons")

Der silberne Farbton des in Beispiel 1 genannten Edelmetallpräparats GPP 4510 konnte, ohne dass die Gebrauchseigenschaften der Unterseitenbeschichtung beeinträchtigt wurden, durch Aufbringen einer weiteren Farbschicht verändert werden. Dazu wurde die keramisierte Glaskeramikplatte zunächst mittels Siebdruck (Siebweite 140-31) mit GPP 4510 beschichtet. Nachdem die Farblage getrocknet war, wurde eine weitere Farbschicht GPP 4510 (Siebweite 140-31) über die erste Farbschicht gedruckt. Nach dem Einbrand bei 830 °C wurden die Farbwerte mit Hilfe eines Spektralphotometers (Mercury 2000, Datacolor GmbH) bestimmt. Der Vergleich der Farbwerte des Einschichtsystems mit dem zugehörigen Zweischichtsystem zeigt, dass bei erhöhter Schichtdicke (Zweischichtsystem) ein geringfügig anderer Farbton erzielt werden kann, wie es in der nachfolgenden Tabelle 2 dargestellt ist:

**Tab. 2**

| **Farbwerte verschiedener Edelmetall-Schichtsysteme** | | | | | |
|---|---|---|---|---|---|
| Versuch | Prüfkörper | Farbwerte | | | Farbunterschied ΔE |
| | | L* | a* | b* | |
| 1 | einfache Schicht "silber" | 71,0 | 2,4 | 11,2 | 0,7 |
| 2 | zweifache Schicht "silber" | 70,4 | 2,7 | 11,4 | |
| 3 | einfache Schicht "gold" | 73,9 | 8,6 | 33,7 | 1,6 |
| 4 | zweifache Schicht "gold" | 73,9 | 8,9 | 35,3 | |
| 5 | 1. Schicht "silber" 2. Schicht "gold" | 71,1 | 7,5 | 21,7 | --- |
| 6 | farbloses Substrat nach Tabelle 1, linke Spalte ohne Beschichtung, mit hinterlegter Weißkachel | 88,9 | -1,0 | 6,2 | --- |
| 7 | Weißkachel allein | 96,3 | -0,4 | 2,5 | --- |

Die Farbwerte wurden durch das o. g. Substrat hindurch gemessen, d.h. aus Sicht des Benutzers. Farbmeßgerät: Mercury 2000, Datacolor GmbH. Edelmetallpräparate:
"silber": GPP 4510, Heraeus
"gold": GGP 070505, Heraeus

Als zweite Farbschicht kann auch ein anderes Edelmetallpräparat gewählt werden, z. B. kann auf ein silbern glänzendes Edelmetallpräparat, z. B. Glanzplatinpräparat, ein Edelmetallpräparat, das nach Einbrand gold glänzend ist, z. B. ein Glanzgoldpräparat, gedruckt werden. Die Kombination beider Edelmetallpräparate, z. B. GPP 4510 u. GGP 050507, ergab einen bronzefarbenen Farbton (Tab. 2, Versuch 5).

Durch die Schichtdickenvariation ist daher eine Nuancierung des Farbtons der Unterseitenbeschichtung möglich. Durch den Einsatz verschiedener Edelmetallpräparate ist eine mehrfarbige Gestaltung der Unterseitenbeschichtung möglich.

### Beispiel 4 ("chemisch nicht beständiges Goldpräparat") - nicht erfindungsgemäß

Als Gegenbeispiel zu dem gegenüber Lebensmitteln beständigen Glanzgoldpräparat GGP 070505 (Beispiel 2) wurde ein kommerziell erhältliches, silberhaltiges Glanzgoldpräparat GGP 1213-10% (Fa. HERAEUS, Hanau) analog Beispiel 1 auf eine keramisierte Glaskeramik-Kochfläche gedruckt und eingebrannt.

Der Edelmetallanteil der Farbe betrug 10 Gew.-% (90 Gew.-% Glühverlust), der Silberanteil der eingebrannten Beschichtung war 11 - 17 Gew.-%, der Edelmetallfilm bestand im Übrigen zu 66 - 88 Gew.-% aus Gold, jeweils 0,5 - 2 Gew.-% aus Rhodium und Bismuth und zu 0 - 1 Gew.-% aus Silicium.

Die fertige Glaskeramikplatte wurde als Kochfläche in ein Kochfeld mit Gasanwendung eingebaut.

Zur Prüfung der Beständigkeit gegenüber Lebensmitteln wurden Soja und Öl auf die Unterseitenbeschichtung aufgebracht und durch den Betrieb des Kochfeldes eingebrannt. Auf derjenigen Seite, die dem Benutzer abgewandt - also nicht zugänglich - war, entstanden durch den Einbrand des Öls und der Soja-Sauce schwarze Flecken. Die Flecken waren bei der Betrachtung der Kochflächenoberseite, d. h. der Seite, die dem Benutzer zugewandt ist, als bräunlich verfärbte Bereiche sichtbar, d. h., die vorgenommene, nicht erfindungsgemäße Beschichtung ist nicht ausreichend beständig gegenüber Lebensmitteln.

### Beispiel 5 ("Siliconfarbe zur Erhöhung der Abriebbeständigkeit")

Eine Glaskeramikplatte, die analog zu Beispiel 1 hergestellt wurde, wurde zusätzlich per Siebdruck (Siebgewebe 54-64) unterseitig mit einer hitzebeständigen, schwarzen Siliconfarbe (GSX, Fa. Daishin Paint) ganzflächig beschichtet. Die Farbe wurde 5 min bei 180 °C getrocknet und anschließend 30 min bei 400 °C eingebrannt. Die fertige Glaskeramikplatte wurde als Kochfläche in ein Kochfeld für Induktionsanwendung (Fa. Bosch-Siemens-Hausgeräte, B/S/H) eingebaut. Die Beständigkeit der Unterseitenbeschichtung gegenüber scheuernden Bauteilen (Glimmerplatte über Induktionsspule, Metallplatte von Warmhaltezone) wurde durch 10maliges, wiederholtes Ein- u. Ausschalten aller Heizstellen und der Warmhaltezone entsprechend einem Betrieb bei maximaler Leistung, geprüft. Bei der anschließenden Betrachtung der Kochfläche von der dem Benutzer zugewandten Seite konnten keine Kratzer oder abgeriebenen Bereiche festgestellt werden. Die Unterseitenbeschichtung ist daher für Induktionsanwendungen ausreichend abriebbeständig. Die übrigen, in Beispiel 1 genannten Eigenschaften wurden durch die Siliconfarbe nicht beeinträchtigt. Es zeigte sich sogar, dass die Beständigkeit gegenüber Lebensmitteln durch die Silikonfarbe noch weiter zunimmt, da die Siliconfarbe den direkten Kontakt von Lebensmitteln zu der Edelmetallschicht verhindert und gleichsam als "Opferschicht" wirkt.

Die Ausführungsbeispiele zur Erfindung beziehen sich auf farblose, d. h. nicht in der Schmelze eingefärbte Glaskeramiken. Die Glaskeramik könnte aber auch leicht getönt sein (z. B. braun, rot oder auch blau). Dabei verbietet sich prinzipiell die erfindungsgemäße unterseitige Beschichtung einer blickdicht eingefärbten oder einer opak keramisierten Glaskeramik, also einer Glaskeramik, durch die man nicht mehr hindurch sehen kann.

### Figurenbeschreibung:

- Fig.1: Oberseitendekor im *kaschierenden unsymmetrischen Raster*
Strichlänge: 2,0 - 2,5 mm
Strichbreite: 0,5 mm
Belegungsgrad: 17 %
- Fig. 2: Oberseitendekor im *kaschierenden symmetrischen Raster*
Punktdurchmesser: 0,5 mm
kleinster Punktabstand: 2,5 mm
Belegungsgrad: 3,4 %
- Fig. 3 A: Oberseitendekor im *nicht kaschierenden Raster*
Punktdurchmesser: 0,4 mm
kleinster Punktabstand: 0,82 mm
Belegungsgrad: 20 %
- Fig. 3: B Oberseitendekor im *nicht kaschierenden Raster*
Punktdurchmesser: 0,5 mm
kleinster Punktabstand: 1,2 mm
Belegungsgrad: 13 %
- Fig. 4: Spektraler Transmissionsgrad der mit GPP 4510 unterseitig gemäß dem Verfahren nach Beispiel 1 beschichteten Glaskeramikplatte (ohne Oberseitendekor).

## Patentansprüche

1. Glaskeramikplatte, ausgebildet als Kochfläche für ein Kochfeld, bestehend aus einer neben der IR-Strahlung auch für das sichtbare Licht transparenten Glaskeramik vom Typ Li₂O-Al₂O₃-SiO₂, mit einer unterseitigen Beschichtung der Glaskeramikplatte in Form eines Edelmetallfilmes, **dadurch gekennzeichnet, dass**
- der Edelmetallfilm aus einer ihm eine spiegelnde Eigenschaft verleihenden Legierung aus Gold und/oder Platin und/oder Palladium besteht,
- der Edelmetallfilm einen Gesamtedelmetallgehalt von 90 - 100 Gew.-% bezogen auf das gesamte Filmmaterial aufweist,
- der Gehalt an Silber, Kupfer, Silicium, Bismut sowie unedler Metalle in dem Edelmetallfilm insgesamt maximal 0 - 5 Gew.-% bezogen auf den Gesamtmetallgehalt,
- die Schichtdicke des Edelmetallfilms < 1 µm und
- der spektrale Transmissionsgrad der beschichteten Glaskeramikplatte im sichtbaren Wellenlängenbereich 0 - 4 % und im Infrarot-Bereich 0 bis < 12 % beträgt,
- und dass auf der Oberseite der Glaskeramikplatte ein rasterförmiges Dekor aufgebracht ist.

2. Glaskeramikplatte nach Anspruch 1, **dadurch gekennzeichnet, dass** der Gehalt an Silber, Kupfer, Silicium, Bismut sowie unedler Metalle in dem Edelmetallfilm 0 bis 1 Gew.-% bezogen auf den Gesamtmetallgehalt beträgt.

3. Glaskeramikplatte nach Anspruch 1 oder 2, **dadurch gekennzeichnet, dass** der Edelmetallfilm einen Gesamt-Edelmetallgehalt von 95 - 100 Gew.-%, bezogen auf das gesamte Filmmaterial, aufweist.

4. Glaskeramikplatte nach einem der Ansprüche 1 bis 3, **dadurch gekennzeichnet, dass** die Schichtdicke des Edelmetallfilms 0,05 - 0,5 µm und insbesondere bevorzugt 0,1 - 0,2 µm beträgt.

5. Glaskeramikplatte nach einem der Ansprüche 1 bis 4, **dadurch gekennzeichnet, dass** der Edelmetallfilm durch Siebdruck auf der Plattenunterseite aufgebracht ist.

6. Glaskeramikplatte nach einem der Ansprüche 1 bis 5, **dadurch gekennzeichnet, dass** der Edelmetallfilm einen Filmstabilisator, beispielsweise Rhodiumoxid, aufweist.

7. Glaskeramikplatte nach einem der Ansprüche 1 bis 6, **dadurch gekennzeichnet, dass** das Raster des oberseitigen Dekors durch punkt- oder strichartige oder durch unsymmetrische Strukturelemente gebildet ist.

8. Glaskeramikplatte nach einem der Ansprüche 1 bis 7, **dadurch gekennzeichnet, dass** das Raster des oberseitigen Dekors durch stochastisch verteilte Strukturelemente gebildet ist.

9. Glaskeramikplatte nach einem der Ansprüche 1 bis 7, **dadurch gekennzeichnet, dass** das Raster des oberseitigen Dekors durch symmetrisch verteilte Strukturelemente gebildet ist.

10. Glaskeramikplatte nach Anspruch 9, **dadurch gekennzeichnet, dass** der Flächen-Belegungsgrad der Strukturelemente bezogen auf die gesamte Flächenoberseite im Bereich von 2 - 12 % liegt und der gegenseitige Abstand der Strukturelemente mindestens 2 mm und höchstens 4 mm beträgt.

11. Glaskeramikplatte nach Anspruch 9, deren Dicke 4 mm beträgt, **dadurch gekennzeichnet, dass** der Flächen-Belegungsgrad der Strukturelemente bezogen auf die gesamte Flächenoberseite im Bereich von 3 - 5 % liegt und der gegenseitige Abstand 2,5 mm beträgt.

12. Glaskeramikplatte nach einem der Ansprüche 1 bis 11, **dadurch gekennzeichnet, dass** der Edelmetallfilm in einzelnen Bereichen oder über die gesamte Plattenunterseite aus einer oder mehreren Einzelschichten, vorzugsweise Drucklagen besteht.

13. Glaskeramikplatte nach Anspruch 12, **dadurch gekennzeichnet, dass** die Einzelschichten, vorzugsweise Drucklagen aus unterschiedlichen Edelmetallpräparaten bestehen.

14. Glaskeramikplatte nach Anspruch 12 oder 13, **dadurch gekennzeichnet, dass** mindestens eine der unterseitig aufgebrachten Edelmetallschichten vollflächig aufgebracht ist.

15. Glaskeramikplatte nach Anspruch 12 oder 13, **dadurch gekennzeichnet, dass** mindestens eine der Edelmetallschichten nicht vollflächig, sondern in einem Raster oder Schriftzug oder geometrischen Figur aufgebracht ist.

16. Glaskeramikplatte nach einem der Ansprüche 1 bis 15 **dadurch gekennzeichnet, dass** der Edelmetallfilm im Heißbereich oder im Displaybereich oder im Bereich von Leuchtanzeigen oder im Bereich anderer Funktionselemente, z. B. Touch-Control-Einheiten der Kochfläche ausgespart ist.

17. Glaskeramikplatte nach einem der Ansprüche 1 bis 16, **dadurch gekennzeichnet, dass** der spektrale Transmissionsgrad der unterseitig beschichteten Glaskeramikplatte im sichtbaren Wellenlängenbereich 0 - 1,7 %, beträgt.

## Claims

1. Glass ceramic plate, designed as a cooking surface for a hob, consisting of a glass ceramic of the type Li₂O-Al₂O₃-SiO₂, which is transparent for visible light as well as for IR radiation, with an underside coating of the glass ceramic plate in the form of a noble metal film, **characterized in that**
- the noble metal film consists of an alloy of gold and/or platinum and/or palladium, which gives it a reflective quality,
- the noble metal film has a total noble metal content of 90-100wt% with respect to the total film material,
- the content of silver, copper, silicon, bismuth and base metals in the noble metal film overall is at most 0-5wt% with respect to the total metal content,
- the thickness of the noble metal film is <1 µm and
- the spectral transmittance of the coated glass ceramic plate is 0-4% in the visible wavelength range and 0 to <12% in the infrared range,
- and that a grid-shaped decoration is applied to the upper side of the glass ceramic plate.

2. Glass ceramic plate according to Claim 1, **characterized in that** the content of silver, copper, silicon, bismuth and base metals in the noble metal film is 0 to 1wt% with respect to the total metal content.

3. Glass ceramic plate according to Claim 1 or 2, **characterized in that** the noble metal film has a total noble metal content of 95-100wt% with respect to the total film material.

4. Glass ceramic plate according to one of Claims 1 to 3, **characterized in that** the thickness of the noble metal film is 0.05-0.5 µm and in particular preferably 0.1-0.2 µm.

5. Glass ceramic plate according to one of Claims 1 to 4, **characterized in that** the noble metal film is applied to the plate underside by screen printing.

6. Glass ceramic plate according to one of Claims 1 to 5, **characterized in that** the noble metal film has a film stabilizer, for example rhodium oxide.

7. Glass ceramic plate according to one of Claims 1 to 6, **characterized in that** the grid of the upper side decoration is formed of dot- or dash-like or asymmetric structure elements.

8. Glass ceramic plate according to one of Claims 1 to 7, **characterized in that** the grid of the upper side decoration is formed of stochastically distributed structure elements.

9. Glass ceramic plate according to one of Claims 1 to 7, **characterized in that** the grid of the upper side decoration is formed of symmetrically distributed structure elements.

10. Glass ceramic plate according to Claim 9, **characterized in that** the degree of surface coating of the structure elements with respect to the total upper side area is in the region of 2-12% and the mutual separation of the structure elements is at least 2 mm and at most 4 mm.

11. Glass ceramic plate according to Claim 9, of 4 mm thickness, **characterized in that** the degree of surface coating of the structure elements with respect to the total upper side area is in the region of 3-5% and the mutual separation is 2.5 mm.

12. Glass ceramic plate according to one of Claims 1 to 11, **characterized in that** the noble metal film consists, in individual regions or over the entire plate underside, of one or more individual layers, preferably printed layers.

13. Glass ceramic plate according to Claim 12, **characterized in that** the individual layers, preferably printed layers, consist of different noble metal preparations.

14. Glass ceramic plate according to Claim 12 or 13, **characterized in that** at least one of the noble metal layers applied to the underside is applied to the entire surface area.

15. Glass ceramic plate according to Claim 12 or 13, **characterized in that** at least one of the noble metal layers is applied not to the entire surface area but in a grid or lettering or geometric figure.

16. Glass ceramic plate according to one of Claims 1 to 15, **characterized in that** the noble metal film is omitted in the hot region or in the display region or in the region of indicator lights or in the region of other functional elements, e.g. touch control units of the cooking surface.

17. Glass ceramic plate according to one of Claims 1 to 16, **characterized in that** the spectral transmittance of the glass ceramic plate coated on the underside is 0-1.7% in the visible wavelength range.

## Revendications

1. Plaque en vitrocéramique configurée comme surface de cuisson pour plaque de cuisson, constituée d'une vitrocéramique de type Li₂O-Al₂O₃-SiO₂ transparente à la fois pour le rayonnement IR et pour la lumière visible, avec un revêtement de la face inférieure de la plaque en vitrocéramique présentant la forme d'un film en métaux précieux,
**caractérisée en ce que**
le film en métaux précieux est constitué d'un alliage d'or, de platine et/ou de palladium qui lui confère une propriété réfléchissante,
**en ce que** le film en métaux précieux présente une teneur totale en métaux précieux de 90 à 100 % en poids par rapport à l'ensemble du matériau du film,
**en ce que** la teneur en argent, cuivre, silicium, bismuth et métaux non précieux dans le film en métaux précieux représente globalement au plus 0 à 5 % en poids de la teneur totale en métaux,
**en ce que** l'épaisseur de la couche du film en métaux précieux est < 1 µm et
**en ce que** le degré de transmission spectrale de la plaque en vitrocéramique revêtue est de 2 à 4 % dans la plage des longueurs d'onde visibles et de 0 à < 12 % dans la plage des infrarouges et
**en ce qu'**un décor en forme de grille est appliqué sur la face supérieure de la plaque en vitrocéramique.

2. Plaque en vitrocéramique selon la revendication 1, **caractérisée en ce que** la teneur en argent, cuivre, silicium, bismuth et métaux non précieux dans le film en métaux précieux représente de 0 à 1 % en poids de la teneur totale en métaux.

3. Plaque en vitrocéramique selon les revendications 1 ou 2, **caractérisée en ce que** le film en métaux précieux présente une teneur totale en métaux précieux de 95 à 100 % en poids du total du matériau du film.

4. Plaque en vitrocéramique selon l'une des revendications 1 à 3, **caractérisée en ce que** l'épaisseur de couche du film en métaux précieux est de 0,05 à 0,5 µm et de façon particulièrement préférable de 0,1 à 0,2 µm.

5. Plaque en vitrocéramique selon l'une des revendications 1 à 4, **caractérisée en ce que** le film en métaux précieux est appliqué sur la face inférieure de la plaque par sérigraphie.

6. Plaque en vitrocéramique selon l'une des revendications 1 à 5, **caractérisée en ce que** le film en métaux précieux présente un stabilisateur de film, par exemple de l'oxyde de rhodium.

7. Plaque en vitrocéramique selon l'une des revendications 1 à 6, **caractérisée en ce que** la grille du décor de la face supérieure est formée d'éléments structurels en points, en traits ou asymétriques.

8. Plaque en vitrocéramique selon l'une des revendications 1 à 7, **caractérisée en ce que** la grille du décor de la face supérieure est formée par des éléments structurels répartis de manière stochastique.

9. Plaque en vitrocéramique selon l'une des revendications 1 à 7, **caractérisée en ce que** la grille du décor de la face supérieure est formée par des éléments structurels répartis symétriquement.

10. Plaque en vitrocéramique selon la revendication 9, **caractérisée en ce que** le degré d'occupation de la surface par les éléments structurels est compris entre 2 et 12 % de la totalité de la surface supérieure et **en ce que** la distance mutuelle entre les éléments structurels est d'au moins 2 mm et d'au plus 4 mm.

11. Plaque en vitrocéramique dont l'épaisseur est de 4 mm, **caractérisée en ce que** le degré d'occupation de la surface par les éléments structurels est compris entre 3 et 5 % de la totalité de la face supérieure, la distance mutuelle entre ces éléments structurels étant de 2,5 mm.

12. Plaque en vitrocéramique 1 à 11, **caractérisée en ce que** le film en métaux précieux est constitué dans certaines parties ou sur la totalité de la face inférieure de la plaque d'une ou plusieurs couches distinctes, de préférence des couches imprimées.

13. Plaque en vitrocéramique selon la revendication 12, **caractérisée en ce que** les couches distinctes, de préférence les couches imprimées, sont constituées de préparations différentes de métaux précieux.

14. Plaque en vitrocéramique selon les revendications 12 ou 13, **caractérisée en ce qu'**au moins une des couches en métaux précieux appliquées sur la face inférieure est appliquée sur toute la surface.

15. Plaque en vitrocéramique selon les revendications 12 ou 13, **caractérisée en ce qu'**au moins l'une des couches en métaux précieux n'est pas appliquée sur toute la surface mais en grille, en inscriptions ou en figures géométriques.

16. Plaque en vitrocéramique selon l'une des revendications 1 à 15, **caractérisée en ce que** le film en métaux précieux est découpé dans la zone de chauffage, la zone d'affichage, la zone d'affichage lumineux ou celle d'autres éléments fonctionnels, par exemple les unités de commande tactile de la surface de cuisson.

17. Plaque en vitrocéramique selon l'une des revendications 1 à 16, **caractérisée en ce que** le taux de transmission spectrale de la plaque en vitrocéramique à face inférieure revêtue est de 0 à 1,7 % dans la plage des longueurs d'onde visibles.
